# EUROPÄISCHE PATENTSCHRIFT

(11) **EP 2 080 589 B1**
(45) Veröffentlichungstag und Bekanntmachung des Hinweises auf die Patenterteilung: **04.08.2010**
(21) Anmeldenummer: 08020093.4
(22) Anmeldetag: 18.11.2008
(51) Int. Cl.: B24B 41/00, B24B 3/00, B23Q 1/62, B23Q 1/48

(54) **Vorrichtung zum Bearbeiten, insbesondere Erodieren und Schleifen, von mit Schneiden versehenen Rotationswerkstücken**
Device for processing, especially eroding and grinding, rotational workpieces marked with cuts
Dispositif destiné au traitement, notamment l'usinage par érosion et le ponçage, de pièces usinées rotatives pourvues de lames de coupe

(30) Priorität: 17.01.2008 DE 102008004851
(43) Veröffentlichungstag der Anmeldung: 22.07.2009
(73) Patentinhaber: VOLLMER WERKE Maschinenfabrik GmbH, 88400 Biberach/Riss (DE)
(72) Erfinder: Lenard, Peter, 88400 Biberach (DE); Veil, Siegfried, 88416 Ochsenhausen (DE); Bailer, Peter, 88433 Schemmerhofen-Altheim (DE); Bailer, Norbert, 88433 Schemmerhofen-Altheim (DE); Brand, Stefan, 88487 Mietingen-Walpertshofen (DE)
(74) Vertreter: Thum, Bernhard

(56) Entgegenhaltungen:
- EP-A- 0 941 790
- WO-A-92/19410
- DE-A1- 10 111 098
- DE-A1-102005 020 035

## Beschreibung

Die vorliegende Erfindung betrifft eine Vorrichtung zum Bearbeiten, insbesondere Erodieren und Schleifen, von mit Schneiden versehenen Rotationswerkstücken, mit einer Maschinenbasis, einer relativ zu der Maschinenbasis verlagerbaren Bearbeitungseinrichtung und einer relativ zur Maschinenbasis verlagerbaren Werkstückpositioniereinrichtung, wobei die Bearbeitungseinrichtung wenigstens ein auf einer zur Maschinenbasis verlagerbaren Schlittenanordnung drehantreibbar angebrachtes Bearbeitungswerkzeug zur Bearbeitung eines zu bearbeitenden Funktionsabschnitts des Rotationswerkstücks aufweist und wobei die Werkstückpositioniereinrichtung eine relativ zur Maschinenbasis verlagerbare Werkstückaufnahmeeinrichtung aufweist, die einen Aufnahmeabschnitt des Rotationswerkstücks unmittelbar oder über einen Aufnahmeadapter zum Anbringen des Rotationswerkstücks an der Werkstückpositioniereinrichtung aufnimmt.

Aus dem Stand der Technik sind eine Vielzahl von Werkzeugmaschinen bekannt, mit denen verschiedenartige Werkstücke bearbeitet werden können. Eine besondere Bearbeitungssituation ergibt sich aber dann, wenn Rotationswerkstücke mit Schneidzähnen bearbeitet werden müssen. Dabei handelt es sich um Werkstücke, die ihrerseits als Werkzeuge in bestimmten Maschinen eingesetzt werden, wie beispielsweise Fräser oder Bohrer, und bei diesem Einsatz mit der Zeit verschleißen, so dass sie wieder geschärft werden müssen. Derartige als Werkzeuge eingesetzte Werkstücke weisen einen Aufnahmeabschnitt auf, mit dem sie in ihrer Funktion als Werkzeug in der jeweiligen Bearbeitungsmaschine eingespannt werden. Ferner weisen derartige Werkzeuge einen Funktionsabschnitt auf, der beispielsweise mit Schneidzähnen, Schneidkanten oder Schneidplatten versehen ist. Der Funktionsabschnitt ist üblicherweise mit einer verhältnismäßig komplizierten Geometrie ausgebildet. Zum Bearbeiten dieses Funktionsabschnitts im Rahmen eines Schleifprozesses oder Erodierprozesses muss das Werkstück sehr genau positioniert werden. Das Bearbeitungswerkzeug zum Bearbeiten des Funktionsabschnitts muss zur Erzielung hinreichend guter Bearbeitungsergebnisse, insbesondere auch wegen der komplizierten Geometrie der Schneiden, in einer ganz bestimmten Relativlage an das Werkstück herangeführt werden. Vorstehende Schilderung zeigt, dass die Bearbeitung von Rotationswerkstücken der vorstehend beschriebenen Art besondere Anforderungen an die verwendete Werkzeugmaschine stellt.

Eine Vorrichtung der eingangs bezeichneten Art ist beispielsweise aus dem Dokument DE 10 2005 020 035 A1 bekannt. Bei dieser Vorrichtung ist eine Bearbeitungseinrichtung an einer Bearbeitungsbrücke angeordnet. Die Bearbeitungseinrichtung weist ein im wesentlichen in vertikaler Richtung hängendes Bearbeitungswerkzeug auf. Das zu bearbeitende Werkstück ist hingegen an einer Werkstückpositioniereinrichtung angebracht, wobei diese das Werkstück im Wesentlichen in horizontaler Richtung ausrichtet, so dass der Funktionsabschnitt des Rotationswerkstücks je nach Kippstellung mehr oder weniger horizontal gerichtet ist.

Es hat sich jedoch gezeigt, dass insbesondere Rotationswerkstücke mit einer verhältnismäßig großen axialen Länge, wie Bohrer oder Schaftfräser, aufgrund ihres Eigengewichts einer gewissen Biegebelastung unterliegen und sich in der beschriebenen Einspannsituation - wenn auch nur in geringem Maße - bedingt durch diese Biegebelastung verformen. Eine solche Biegeverformung muss bei der Bearbeitung des Werkstücks berücksichtigt werden, um qualitativ hochwertige Bearbeitungsergebnisse zu erreichen. Ferner kommt es aufgrund der im wesentlichen horizontalen Ausrichtung des Werkstücks zu unerwünschten Schwingungen am Werkstück bei dessen Verlagerung. Durch die an dem horizontal ausgerichteten Rotationswerkstück quer zu dessen Längserstreckung angreifenden Gravitationskräfte erhält man ein vorgespanntes System, das während der Bearbeitung, beispielsweise mittels einer Schleifscheibe, aufgrund der zusätzlich auftretenden Bearbeitungskräfte nur mit gesteigerten technischem Aufwand zu beherrschen ist.

Aus dem Stand der Technik sind ferner Vorrichtungen bekannt, bei dem ein zu bearbeitendes Werkstück in vertikaler Ausrichtung eingespannt wird, wobei der Aufnahmeabschnitt des Werkstücks in einer Aufnahme aufgenommen wird, die unterhalb des Bearbeitungswerkzeuges angeordnet ist. Eine solche Vorrichtung ist beispielsweise im Dokument DE 101 11 098 A1 gezeigt. Der zu bearbeitende Funktionsabschnitt steht also nach oben aus der Werkstückaufnahme hervor. Derartige Vorrichtungen unterliegen zwar nicht dem Problem einer gravitationsbedingten Biegebelastung am Werkstück. Jedoch besteht ein wesentlicher Nachteil derartiger Vorrichtungen darin, dass bei der Bearbeitung entstehende Späne und Materialabtrag schwerkraftbedingt in die Werkstückaufnahme fallen und diese verschmutzen. Dadurch kann es bei einem Werkstückwechsel zu einer exzentrischen Einspannung kommen, wodurch keine qualitativ hochwertige Bearbeitung mehr möglich ist. Um dies so weit wie möglich zu vermeiden, muss die Werkstückaufnahme stets äußerst sorgfältig und zeitaufwändig gereinigt werden, was die Bearbeitung erheblich verzögert.

Aus dem Stand der Technik sind ferner Drehmaschinen bekannt, bei denen das zu bearbeitende Werkstück in einer Drehspindel eingespannt wird, wobei die Drehspindel im Wesentlichen in vertikaler Richtung ausgerichtet ist. Das Bearbeitungswerkzeug hängt somit vertikal nach unten aus der Drehspindel heraus. Der verwendete selbst nicht drehende Drehmeißel wird linear zur Bearbeitung an das Werkstück herangeführt. Die vertikale Ausrichtung der Drehspindel wurde bei diesen Drehmaschinen vor allem deshalb gewählt, damit sie in horizontaler Richtung äußerst schmal bauen, so dass eine Vielzahl derartiger Drehmaschinen raumsparend nebeneinander angeordnet werden kann. Derartige Drehmaschinen eignen sich nicht für die vorstehend geschilderten komplexen Bearbeitungssituationen bei als Werkzeuge eingesetzten Rotationswerkstücken.

Eine vergleichbare Anordnung ist auch im Dokument DE 100 02 053 C2 gezeigt.

Es ist Aufgabe der vorliegenden Erfindung, eine Vorrichtung der eingangs bezeichneten Art bereitzustellen, mit der komplexe Bearbeitungssituationen zur Bearbeitung von als Werkzeuge einsetzbaren Rotationswerkstücken unter Vermeidung der vorstehend geschilderten Probleme aus dem Stand der Technik hinsichtlich einer Verspannung des Werkstücks sowie einer Verschmutzung der Einspannung zuverlässig durchgeführt werden können.

Diese Aufgabe wird durch eine Vorrichtung der eingangs bezeichneten Art gelöst, bei der vorgesehen ist, dass die Werkstückaufnahmeeinrichtung derart relativ zur Maschinenbasis ausgerichtet ist und den Aufnahmeabschnitt des Rotationswerkstücks derart aufnimmt, dass das Rotationswerkstück zum Bearbeiten mit seinem Funktionsabschnitt im wesentlichen in vertikaler Richtung hängend angeordnet ist.

Erfindungsgemäß wird dem Problem der schwerkraftbedingten Verspannung eines Werkstücks bei horizontaler Ausrichtung desselben dadurch begegnet, dass das zu bearbeitende Rotationswerkstück hängend in der Vorrichtung aufgenommen wird und dass die Bearbeitungseinrichtung an das hängende Rotationswerkstück durch horizontale Verlagerung herangeführt wird. Durch die hängende Anordnung des Rotationswerkstücks lassen sich schwerkraftbedingte Biegebelastungen effektiv vermeiden, weil die Schwerkraft in Achsrichtung des Rotationswerkstücks angreift. Ferner führt die Einspannlösung gemäß der vorliegenden Erfindung mit hängendem Rotationswerkstück zu dem positiven Effekt, dass bei der Bearbeitung entstehende Materialspäne oder anderweitige Verschmutzungen nicht in die Werkstückaufnahmeeinrichtung fallen und diese somit stark verschmutzen können. Vielmehr fallen bei der vorliegenden Erfindung die bei der Bearbeitung entstehenden Späne schwerkraftbedingt nach unten, das heißt von der Werkstückaufnahmeeinrichtung weg.

Gemäß einer Ausführungsvariante der Erfindung kann vorgesehen sein, dass die Schlittenanordnung einen ersten Positionierschlitten und einen zweiten Positionierschlitten mit zueinander im wesentlichen orthogonalen, horizontal verlaufenden Bewegungsachsen aufweist. Dadurch lässt sich das Bearbeitungswerkzeug in horizontaler Lage wie mit einer üblichen Kreuzschlittenanordnung in gewünschter Weise verlagern.

Zum Antreiben des Bearbeitungswerkzeugs kann erfindungsgemäß vorgesehen sein, dass die Bearbeitungseinrichtung eine um eine Bearbeitungsspindelachse drehantreibbare Bearbeitungsspindel aufweist. Diese ist beispielsweise auf der Kreuzschlittenanordnung angebracht und kann so in gewünschter Weise positioniert werden. Alternativ kann auch eine Bearbeitungseinrichtung mit einer Drahterodiervorrichtung eingesetzt werden.

Die vorstehend geschilderten komplexen Bearbeitungssituationen bei der Bearbeitung von mit Schneidzähnen versehenen Rotationswerkstücken machen es häufig erforderlich, neben der üblichen translatorischen Verlagerung von Rotationswerkstück und Bearbeitungswerkzeug zueinander auch eine schräge Anordnung dieser Komponenten zueinander vorzunehmen. Um eine derartige schräge Anordnung zu erreichen, kann erfindungsgemäß vorgesehen sein, dass die Bearbeitungseinrichtung eine Spindelschwenkeinrichtung aufweist, mittels der die Bearbeitungsspindel um eine Spindelschwenkachse derart verschwenkbar ist, dass die Bearbeitungsspindelachse sowohl in horizontale als auch in vertikale Lage sowie in Zwischenstellungen bringbar ist. Erfindungsgemäß ist es möglich, die Bearbeitungsspindelachse um bis zu 210° oder mehr um die Spindelschwenkachse zu verschwenken. Dadurch lässt sich das Bearbeitungswerkzeug in jede beliebige Winkelausrichtung relativ zu dem zu bearbeitenden Rotationswerkstück bringen, so dass auch komplexe Bearbeitungssituationen aufgrund einer komplexen Geometrie des Funktionsabschnitts bewältigt werden können.

Eine Weiterbildung der Erfindung sieht vor, dass die Werkstückpositioniereinrichtung eine um eine Werkstückaufnahmespindelachse drehantreibbare Werkstückaufnahmespindel aufweist. Durch diese Maßnahme lässt sich das Rotationswerkstück um seine Längsachse in jede beliebige Drehstellung bringen und in dieser fixieren. Auch dadurch wird es möglich, dass mit dem Bearbeitungswerkzeug beliebige Punkte am Funktionsabschnitt des Rotationswerkstücks bearbeitet werden können.

Ferner kann vorgesehen sein, dass die Werkstückpositioniereinrichtung eine Spindelkippeinrichtung aufweist, mittels der die Werkstückaufnahmespindel um eine Spindelkippachse derart verschwenkbar ist, dass das zu bearbeitende Rotationswerkstück in vertikale Schrägstellung bringbar ist. Hierzu ist anzumerken, dass die Grundausrichtung des Rotationswerkstücks trotz Schrägstellung weiterhin im wesentlichen vertikal bleibt. Es ist beispielsweise eine maximale Schrägstellung von +/- 15° aus der exakten Vertikalausrichtung heraus vorgesehen. Durch die Möglichkeit einer Schrägstellung des Rotationswerkstücks zur Bearbeitung ergeben sich weitere Freiheiten zur Bearbeitung komplexer Geometrien von Funktionsabschnitten an Rotationswerkstücken.

Vorstehend wurden insbesondere verschiedene Achsen der erfindungsgemäßen Vorrichtung erläutert, sowie die sich daraus ergebenden Möglichkeiten zur Bearbeitung des Rotationswerkstücks. Neben weit reichenden Möglichkeiten zur Auswahl verschiedener Relativlagen von Rotationswerkstück und Bearbeitungswerkzeug ist zur Bewältigung komplexer Bearbeitungssituationen ferner eine größere Auswahl von verschiedenen Bearbeitungswerkzeugen erforderlich. Dabei zu beachten, dass für eine qualitativ hochwertige Bearbeitung mit hinreichend gutem Bearbeitungsergebnis, auch eine auf das jeweilige Bearbeitungswerkzeug und die Bearbeitungssituationen abgestimmte Kühlmittelzufuhr erforderlich ist. Um dieser Anforderung gerecht zu werden, ist gemäß einer Ausführungsvariante der Erfindung ferner vorgesehen, dass die Bearbeitungseinrichtung mit einem Werkzeugträger koppelbar ist, an dem ein Bearbeitungswerkzeug und eine diesem zugeordnete Kühl-/Schmiermittelzufuhranordnung vorgesehen ist. Bei dieser Ausführungsvariante wird gewährleistet, dass der Werkzeugträger ein bestimmtes Bearbeitungswerkzeug bewegbar hält und eine diesem zugeordnete und auf diesen abgestimmte Kühl-/Schmiermittelzufuhranordnung aufweist. Dabei kann die Kühl-/Schmiermittelzufuhranordnung speziell auf das in dem Werkzeugträger angeordnete Bearbeitungswerkzeug ausgerichtet werden.

Um eine Mehrzahl von verschiedenartigen Bearbeitungswerkzeugen bereitzustellen, sieht eine Weiterbildung der Erfindung vor, dass eine Mehrzahl von Werkzeugträgern an einem vorzugsweise drehantreibbaren, insbesondere scheibenförmigen oder palettenartigen, Werkzeugträgermagazin anbringbar ist. Jeder Werkzeugträger weist dabei ein bestimmtes Bearbeitungswerkzeug und die diesem zugeordnete Kühl-/Schmiermittelzufuhranordnung auf.

Zur einfachen Kopplung von Werkzeugträger, Bearbeitungswerkzeug und Kühl-/Schmiermittelzufuhranordnung mit der Bearbeitungseinrichtung kann in diesem Zusammenhang gemäß einer Weiterbildung der Erfindung vorgesehen sein, dass jeder Werkzeugträger eine vordefinierte Schnittstelle zum Fixieren an der Bearbeitungseinrichtung, zum Anschließen einer Kühl-/Schmiermittelzuführung und zum Ankoppeln des Bearbeitungswerkzeugs an der Bearbeitungsspindel aufweist. Auf diese Weise lässt sich eine Kombination aus Bearbeitungswerkzeug und Kühl-/Schmiermittelzufuhranordnung über den Werkzeugträger koppeln und jeweils einheitlich handhaben. Diese Schnittstelle kann sozusagen standardisiert werden, so dass beliebige derartige Kombinationen ohne größeren Aufwand und unter Minimierung der erforderlichen Rüstzeiten eingesetzt werden können.

In diesem Zusammenhang spielt gleichermaßen das Abgeben und Entnehmen einzelner Werkzeugträger an das Magazin und aus diesem daraus eine bedeutende Rolle. Auch die Übergabe und Übernahme eines Werkzeugträgers mit entsprechendem Bearbeitungswerkzeug und diesem zugeordnete Kühl-/Schmiermittelzufuhranordnung kann erfindungsgemäß durch einfache Maßnahmen vereinheitlicht werden. In diesem Zusammenhang kann vorgesehen sein, dass jeder Werkzeugträger eine Haltestruktur, insbesondere eine Haltestiftanordnung, zum lösbaren Anbringen an dem Werkzeugträgermagazin aufweist. Das Werkzeugträgermagazin weist eine korrespondierende Aufnahmeanordnung mit Öffnungen für die Haltestiftanordnung auf.

Gemäß einer weiteren Ausführungsvariante kann die erfindungsgemäße Vorrichtung ferner eine Werkstückwechseleinrichtung zum Aufnehmen und Wechseln des zu bearbeitenden Werkstücks aufweisen. Dabei kann vorgesehen sein, dass die Werkstückwechseleinrichtung einen an der Bearbeitungseinrichtung angebrachten Werkstückwechselarm aufweist, der um eine Wechselarmschwenkachse relativ zur Bearbeitungseinrichtung zu einem Werkstückmagazin hin schwenkbar ist. So kann die Bearbeitungseinrichtung zum Wechseln des Werkstücks über die Kreuzschlittenanordnung in eine gewünschte Relativposition zu dem zu wechselnden Rotationswerkstück gebracht werden. Danach kann der Werkstückwechselarm an dem Rotationswerkstück angreifen und in dieses durch Verschwenken, beispielsweise über Kopf um 180° in das Werkstückmagazin einlegen. In der Folge kann der Werkstückwechselarm ein weiteres zu bearbeitendes Rotationswerkstück aus dem Werkstückmagazin entnehmen.

Gemäß einer weiteren Ausführungsform der Erfindung kann vorgesehen sein, dass die Werkstückpositioniereinrichtung an einem hohl ausgebildeten Säulenabschnitt der Maschinenbasis angebracht und entlang dieses Säulenabschnitts in vertikaler Richtung relativ zur Maschinenbasis verlagerbar ist und dass in dem im Säulenabschnitt vorgesehenen Hohlraum ein auf die Werkstückaufnahmeeinrichtung abgestimmtes, mit der Werkstückpositioniereinrichtung gekoppeltes Gegengewicht geführt ist. Mit anderen Worten lässt sich die Werkstückpositioniereinrichtung mittels eines über eine Rolle an dem oberseitigen Säulenabschnitt geführten Seils oder einer Kette umlenken und mit einem Gegengewicht koppeln. Zur eigentlichen Verlagerung der Werkstückaufnahmeeinrichtung in vertikaler Richtung sind aufgrund der ausgeglichenen Gewichtsverhältnisse zwischen Werkstückpositioniereinrichtung und Gegengewicht nur geringe Stellkräfte erforderlich, was eine entsprechend leistungsschwache Auslegung des hierfür vorgesehenen motorischen Antriebs bei trotzdem schnellem Ansprechvermögen zulässt. Durch die hohle Gestaltung des Säulenabschnitts lässt sich das Gegengewicht platzsparend unterbringen, wobei dieses zugleich in dem Hohlraum geführt ist.

Ein weiterer zu beachtender Aspekt bei der Bearbeitung komplexer Rotationswerkzeuge besteht darin, dass aufgrund der komplexen Geometrien eine exakte Bestimmung der Relativlage zwischen Rotationswerkstück und Bearbeitungseinrichtung erforderlich ist. Dies gilt insbesondere deshalb, weil auch je nach Bearbeitungssituationen unterschiedliche Bearbeitungswerkzeuge zum Einsatz kommen. In diesem Zusammenhang sieht eine Weiterbildung der Erfindung vor, dass an der Werkstückpositioniereinrichtung ein Mehrachssensor, insbesondere ein Dreiachssensor, vorgesehen ist, mittels dem eine Relativlage des Bearbeitungswerkzeugs relativ zu der Werkstückpositioniereinrichtung und dem an dieser angebrachten Werkstück erfassbar ist. Mittels des Dreiachssensors lässt sich genau die exakte Relativlage im Raum zwischen Werkstückpositioniereinrichtung und Bearbeitungseinrichtung erfassen.

Gemäß einer vorteilhaften Weiterbildung der Erfindung kann vorgesehen sein, dass an der Werkstückpositioniereinrichtung eine Abrichteinrichtung zum Abrichten des Bearbeitungswerkzeugs vorgesehen ist. Dadurch lässt sich das Bearbeitungswerkzeug, beispielsweise eine Schleifscheibe, zwischen zwei Bearbeitungsschritten oder regelmäßigen Abständen neu Abrichten, so dass verschleißbedingter Materialabtrag, der zu unregelmäßigen Bearbeitungsergebnissen führen kann, an der Schleifscheibe beseitigt werden kann.

Die Erfindung wird im Folgenden beispielhaft anhand der beiliegenden Figuren erläutert. Es stellen dar:
- Figur 1: eine perspektivische Gesamtansicht der erfindungsgemäßen Vorrich- tung,
- Figur 2: einen vergrößerten Bildausschnitt der perspektivischen Ansicht aus Figur 1, welcher die Bearbeitungssituation im Detail darstellt,
- Figur 3: eine perspektivische Ansicht der erfindungsgemäßen Vorrichtung von oben,
- Figur 4: eine perspektivische Detaildarstellung zur Erläuterung der Übergabe eines Werkzeugträgers an das Magazin,
- Figur 5: eine Vorderansicht eines Werkzeugträgers mit Werkzeug und Kühl- /Schmiermittelzufuhranordnung,
- Figur 6: eine Seitenansicht des Werkzeugträgers aus Figur 5,
- Figur 7: eine Schnittansicht des Werkzeugträgers gemäß Figur 6,
- Figur 8: eine perspektivische Ansicht zur Erläuterung einer Referenziersituation zwischen Werkstückpositioniereinrichtung und Bearbeitungswerkzeug,
- Figur 9: eine perspektivische Ansicht zur Erläuterung einer weiteren Referen- ziersituation zwischen Werkstückpositioniereinrichtung und Bearbei- tungswerkzeug,
- Figur 10: eine perspektivische Ansicht zur Erläuterung einer weiteren Referen- ziersituation zwischen Werkstückpositioniereinrichtung und Bearbei- tungswerkzeug und
- Figur 11: einen vergrößerten Bildausschnitt entsprechend Figur 2, welcher eine weitere Bearbeitungssituation im Detail darstellt,

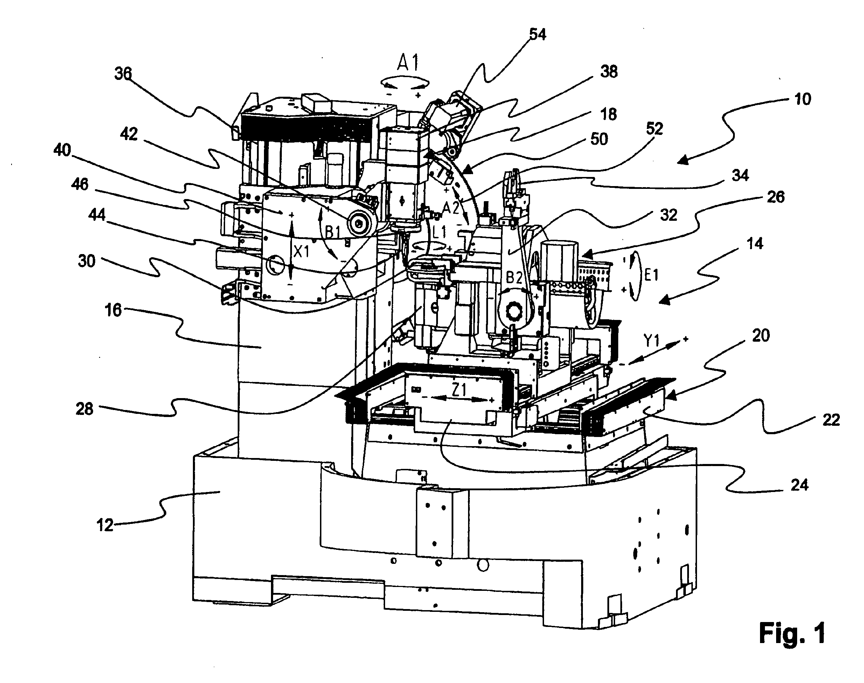

Figur 1 zeigt in perspektivischer Gesamtdarstellung eine erfindungsgemäße Vorrichtung, die allgemein mit dem Bezugszeichen 10 bezeichnet ist. Diese als Schleif- und Erodiermaschine ausgebildete Vorrichtung 10 weist eine Maschinenbasis 12 auf, an der eine Bearbeitungseinrichtung 14 angebracht ist. Die Maschinenbasis 12 weist eine Säulenstruktur 16 auf, an der eine Werkstückpositioniereinrichtung 18 angebracht ist.

Die Bearbeitungseinrichtung 14 weist eine Kreuzschlittenanordnung 20 auf, mit einem ersten Schlitten 22, der entlang der Richtung Z1 verfahrbar ist und mit einem zweiten Schlitten 24, der entlang der Richtung Y1 verfahrbar ist. Die beiden Schlitten sowie sämtliche weitere Achsen zum Verlagern von Maschinenkomponenten sind jeweils in CNC gesteuert.

Auf der Schlittenanordnung 20 ist ein Bearbeitungskopf 26 angebracht, der an seinem in Figur 1 linken Bereich eine Bearbeitungsspindel 28 aufweist. Die Bearbeitungsspindel 28 ist an ihrem in Figur 1 oberen Ende mit einer weiter unten im Detail erläuterten Werkzeugträgereinrichtung 90 koppelbar, die ein Bearbeitungswerkzeug 30 aufweist. Das Bearbeitungswerkzeug 30, im dargestellten Fall eine Schleifscheibe, ist um eine Drehachse L1 drehantreibbar.

Die Bearbeitungsspindel 28 lässt sich an dem Bearbeitungskopf 26 um eine Drehachse E1 beliebig drehen, insbesondere in die gezeigte Vertikalstellung, aber auch in Horizontalstellungen.

An dem Bearbeitungskopf 26 ist ferner eine Werkstückwechseleinrichtung in Form eines Werkstückwechselarms 32 angebracht. Dieser Werkstückwechselarm 32 ist um eine Wechselarmschwenkachse B2 verschwenkbar. Er weist an seinem in Figur 1 oberen Ende einen Greifer 34 auf.

Wendet man sich nun der Werkstückpositioniereinrichtung 18 zu, so erkennt man, dass auch diese entlang der Säulenstruktur 16 über Führungen 36 entlang der Richtung X1 verlagerbar ist. Die Werkstückpositioniereinrichtung 18 weist ferner eine Werkstückaufnahmespindel 38 auf. Diese Werkstückaufnahmespindel 38 ist drehantreibbar wie durch den Drehpfeil A1 angedeutet. Darüber hinaus ist die Werkstückaufnahmespindel an dem in vertikaler Richtung X1 verlagerbaren Schlitten 40 um eine Schwenkachse B1 an einem Drehlager 42 in gewissem Maß verkippbar.

In Figur 1 erkennt man auch ein Rotationswerkstück 44, das an einer Werkstückaufnahmeeinrichtung 46 drehfest aufgenommen und eingespannt ist. Bei dem Rotationswerkstück 44 handelt es sich um einen Schaftfräser, der mittels der Schleifscheibe 30 an einzelnen Schneiden bearbeitet werden muss.

Figur 1 lässt ferner ein Magazin 50 erkennen, das eine gemäß dem Drehpfeil A2 drehbare Magazinscheibe 52 aufweist. Die Magazinscheibe 52 ist mit einer umlaufenden Außenverzahnung versehen und lässt sich über den Drehantrieb 54 drehantreiben.

Die erfindungsgemäße Vorrichtung 10, wie sie in Figur 1 gezeigt ist, besitzt die Besonderheit, dass das zu bearbeitende Rotationswerkstück 44 in vertikal hängender Anordnung an der Werkstückpositioniereinrichtung 18 angebracht ist. Es lässt sich in dieser hängenden Anordnung über die Bearbeitungseinrichtung 14 bearbeiten. Dabei wird das Bearbeitungswerkzeug 30 über die Kreuzschlittenanordnung 20 in horizontaler Richtung zu dem Rotationswerkstück 44 ausgerichtet. Ferner kann das Bearbeitungswerkzeug 30 auch durch Schwenken der Bearbeitungsspindel 28 gemäß der Achse E1 verschwenkt werden. In Richtung X1 wird das Rotationswerkstück 44 durch Verlagern des Schlittens 40 an der Säulenstruktur 16 positioniert. Bei Bedarf kann das Rotationswerkstück 44 auch um die Achse B1 verkippt werden, um besonders komplizierte Geometrien an dem zu bearbeitenden Funktionsabschnitt des Rotationswerkstücks 44 bearbeiten zu können.

Das Rotationswerkstück 44 kann über den Werkstückwechselarm 32 nach einer Bearbeitung aus der Werkstückpositioniereinrichtung 18 entnommen werden. Auch hierfür erfolgen die Verfahrbewegungen über die Kreuzschlittenanordnung 20 sowie den zusätzlichen Schlitten 40. Der Werkstückwechselarm 32 lässt sich um die Achse B2 um mindestens 180° drehen, so dass das Rotationswerkstück 44 nach Entnahme aus der Werkstückpositioniereinrichtung 18 sozusagen "über Kopf" in ein in Figur 1 nicht mehr gezeigtes Magazin einsetzbar und in der Folge aus diesem Magazin ein weiteres zu bearbeitendes Werkstück entnehmbar ist, das dann wieder in die Werkstückpositioniereinrichtung 18 eingesetzt werden kann.

Das Magazin 50 dient zur Aufnahme einer Vielzahl von Bearbeitungswerkzeugen 30. Je nach Bedarf lässt sich die Bearbeitungseinrichtung 14 mit einem geeigneten Bearbeitungswerkzeug 30 bestücken, das in dem Magazin 50 aufgenommen ist. Das gewünschte Bearbeitungswerkzeug wird durch entsprechende Drehung der Drehscheibe 52 in eine Übergabeposition verdreht. Die Bearbeitungseinrichtung 14 kann durch eine Verfahrbewegung auf der Kreuzschlittenanordnung 20 sowie durch Verschwenken der Spindel 28 um die Achse E1 zur Abgabe und zum Aufnehmen eines neuen Bearbeitungswerkzeugs entsprechend positioniert werden.

Insgesamt erkennt man in Figur 1, dass mit der erfindungsgemäßen Vorrichtung eine kompakte Maschine vorliegt, mit der komplexe Bearbeitungsaufgaben bewältigt werden können, wie sie sich bei der Bearbeitung von Rotationswerkstücken stellen. Ein wesentlicher Vorteil dieser Maschine liegt darin, dass das Rotationswerkstück 44 in hängender Ausrichtung bearbeitet wird, so dass gravitationsbedingte Belastungen, die insbesondere bei langen schaftartigen Rotationswerkstücken als Biegebelastungen auftreten, vermieden werden können. Während der Bearbeitung auftretende Späne und Materialabtrag fallen nach unten, so dass sie die Werkstückpositioniereinrichtung 18 und insbesondere die Werkstückaufnahmeeinrichtung 46 nicht verschmutzen.

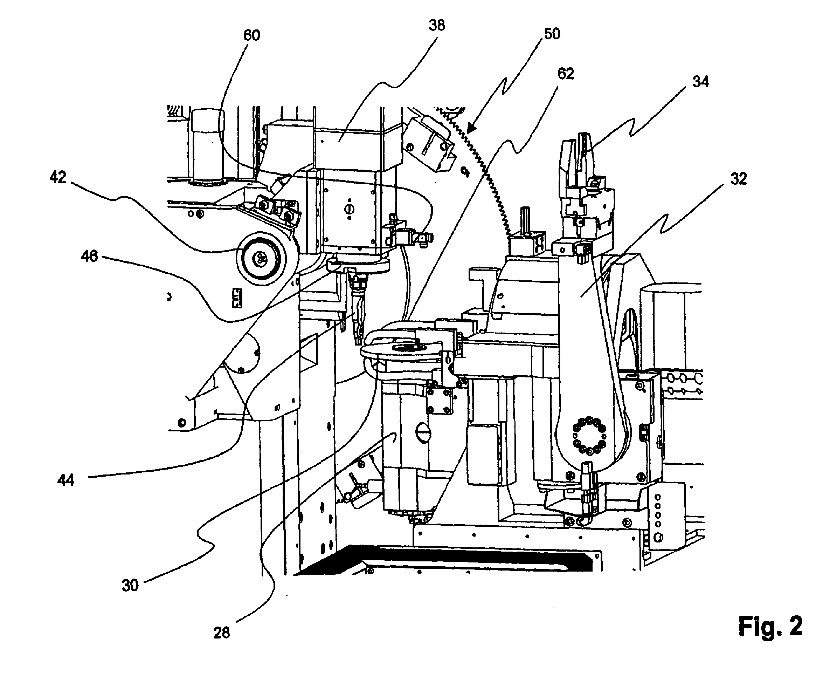

Figur 2 zeigt einen vergrößerten Ausschnitt, der eine konkrete Bearbeitungssituation darstellt. Man erkennt im zentralen Bereich von Figur 2 das zu bearbeitende Rotationswerkstück 44, das in der Werkstückaufnahmeeinrichtung 46 mit seinem nicht gezeigten Aufnahmeabschnitt aufgenommen und fest eingespannt ist. Das Rotationswerkstück 44 befindet sich in im Wesentlichen vertikaler Ausrichtung, d.h. die Werkstückaufnahmespindel 38 liegt derart, dass ihre Drehachse im Wesentlichen vertikal gerichtet ist. Man erkennt ferner, dass an der Werkstückaufnahmespindel 38 eine Sensoranordnung 60 zum Referenzieren vorgesehen ist. Hierauf wird im Folgenden noch im Detail eingegangen.

Das Bearbeitungswerkzeug 30 wird an das untere Ende des hängenden Rotationswerkstücks 44 zur Bearbeitung einer Schneide seines Funktionsabschnitts herangeführt. Hierzu ist die Bearbeitungsspindel 28 in der dargestellten Situation ebenfalls vertikal ausgerichtet. Oberhalb und unterhalb des Bearbeitungswerkzeugs 30 sind Rohre 62 vorgesehen, die zum Zuführen von Kühl-/Schmiermittel an die Bearbeitungsstelle dienen. Diese Rohre 62 sind in ihrer Anordnung und Geometrie genau auf das Bearbeitungswerkzeug 30 abgestimmt. Sie sind an einem Werkzeugträger angeordnet, der lose das Bearbeitungswerkzeug 30 trägt, wobei die Einheit aus Werkzeugträger, Rohren 62 und Bearbeitungswerkzeug 30 als Ganzes an das Magazin 50 übergebbar und von diesem entnehmbar ist.

Der Werkstückwechselarm 32 mit seinem Greifer 34 befindet sich in einer Passivstellung, in der er im Wesentlichen vertikal liegt.

Man erkennt in Figur 2 auch, dass das Rotationswerkstück 44 verhältnismäßig komplizierte Geometrie mit einer Vielzahl von Funktionsflächen aufweist, die im Einzelnen bearbeitet werden müssen. Hierzu ist es erforderlich, das Bearbeitungswerkzeug 30 und ebenso das Rotationswerkstück 44 in verschiedenste Relativlagen durch translatorische Bewegungen und Verkippbewegungen zueinander zu bringen. All diese Relativlagen lassen sich mit der erfindungsgemäßen Vorrichtung erzielen, wobei diese zugleich eine kompakte Gestalt aufweist. Der wesentliche Vorteil, der sich in Figur 2 in besonderer Weise zeigt, liegt in der hängenden Anordnung des zu bearbeitenden Rotationswerkstücks.

Mit der gezeigten Anordnung ergeben sich insbesondere die folgenden Vorteile:
- Das Rotationswerkstück 44 unterliegt in einer Einspannsituation bei rein vertikaler Ausrichtung keinen gravitationsbedingten Biegebelastungen. Selbst bei einem Verschwenken um die Schwenkachse B1 sind die Biegebelastungen zu vernachlässigen.
- Die Werkstückaufnahmeeinrichtung 46 wird aufgrund ihrer Anordnung oberhalb der Bearbeitungsstelle nicht durch Materialabtrag und während der Bearbeitung auftretende Späne verschmutzt.
- Translatorisch bedingte Schwingungen an dem zu bearbeitenden Rotationswerkstück treten nur minimal in dessen Längsrichtung auf. Querschwingungen treten aufgrund fehlender translatorischer Verlagerung dieses Werkstücks nicht auf. Dadurch lassen sich Bearbeitungszeiten verkürzen, weil kein "Beruhigen" eines verlagerten Rotationswerkstücks zum Abbau von Schwingungen erforderlich ist.
- In vielen Bearbeitungssituationen werden die Rotationswerkstücke so bearbeitet, wie sie später auch eingesetzt werden. Man erkennt dies besonders gut in Figur 2, wo ein Fräser, der üblicherweise auch in hängender Anordnung in der Fräsmaschine eingesetzt wird, in entsprechender Anordnung bearbeitet wird.

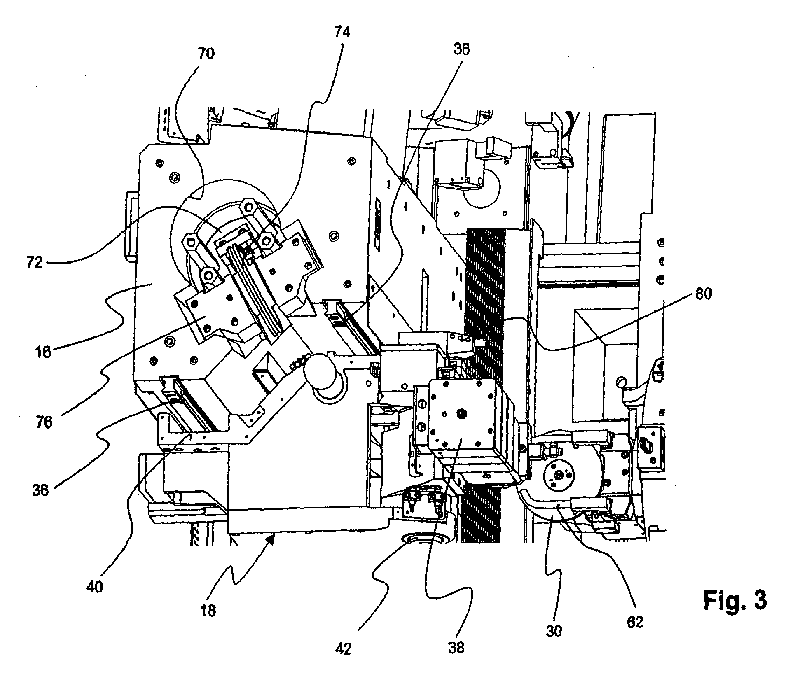

In Figur 3 erkennt man in der Draufsicht die Säulenstruktur 16 der Maschinenbasis. Man erkennt, dass diese Säulenstruktur 16 mit einem Hohlraum 70 ausgebildet ist. In diesem Hohlraum 70 ist ein Gegengewicht 72 in vertikaler Richtung geführt aufgenommen. Dieses Gegengewicht 72 ist über ein nicht gezeigtes Seil im Stile eines Flaschenzugs mit dem in vertikaler Richtung verlagerbaren Schlitten 40 verbunden. Das Seil ist über eine an der Säulenstruktur gelagerte Rolle 74 geführt. Die Rolle 74 ist in seitlich angeordneten Lageranordnungen 76 reibungsarm gelagert.

Durch das Koppeln des Schlittens 40, an dem die Werkstückpositioniereinrichtung mit der Werkstückaufnahmespindel 38 angeordnet ist, mit dem Gegengewicht 72 über das über die Rolle 74 geführte Seil kann das Gewicht der Werkstückpositioniereinrichtung 18 "neutralisiert" werden, so dass diese trotz ihres erheblichen Eigengewichts mit verhältnismäßig geringem Kraftaufwand in vertikaler Lage zum Positionieren des Rotationswerkstücks verlagert werden kann. Für eine exakte Positionierung sorgen ein im Einzelnen nicht gezeigter Stelltrieb, sowie die Linearführungen 36, die an der Säulenstruktur 16 angebracht sind.

In Figur 3 erkennt man ferner eine Abrichteinrichtung 80, mit der das Bearbeitungswerkzeug 30, beispielsweise eine Schleifscheibe, bei Bedarf abgerichtet werden kann. Die Abrichteinrichtung 80 ist in der gezeigten Darstellung als stehende Abrichteinrichtung ausgeführt, d.h. sie bewegt sich ihrerseits nur translatorisch, nicht aber rotatorisch. Alternativ ist es auch möglich, eine rotatorische Abrichteinrichtung vorzusehen, beispielsweise mit einer sich drehenden Abrichtscheibe.

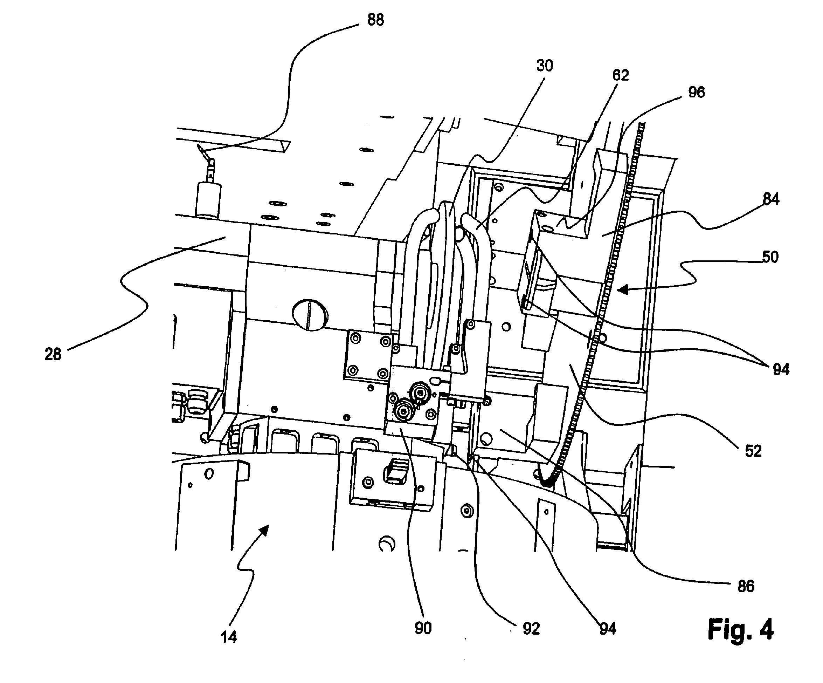

Figur 4 zeigt die Situation am Magazin 50. An der Drehscheibe 52 des Magazins 50 sind mehrere Werkzeughalter 84, 86 über den Umfang verteilt angeordnet. Die Bearbeitungseinrichtung 14 ist über die nicht gezeigte Kreuzschlittenanordnung 20 an das Magazin 40 herangefahren worden, wobei zugleich die Bearbeitungsspindel 28 in horizontale Lage verdreht wurde. In Figur 4 erkennt man ferner, das an der Bearbeitungsspindel 28 noch ein Tastsensor 88 angebracht ist, der zum Abtasten des Rotationswerkstücks vor und nach der Bearbeitung dient.

Figur 4 zeigt auch den Werkzeugträger 90, wie er gerade an dem Werkzeughalter 86 im Magazin 50 herangefahren wird. Obgleich der Aufbau des Werkzeugträgers 90 im Folgenden noch im Detail erläutert wird, sei angemerkt, dass dieser Haltestifte 92 aufweist, die in korrespondierende Öffnungen 94 im Werkzeughalter 86 einsteckbar sind. Ferner weist der Werkzeughalter 86 (ebenso 84) Halteflächen 96 auf, an denen der Werkzeugträger anliegen kann.

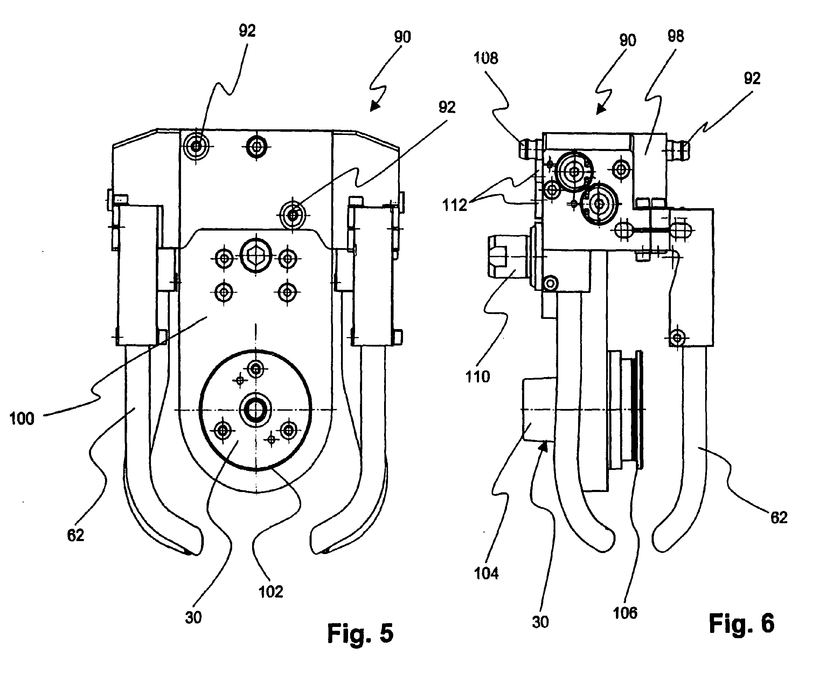

In Figuren 5, 6 und 7 sind Darstellungen des Werkzeugträgers 90 in verschiedenen Ansichten gezeigt. Man erkennt, dass der Werkzeugträger eine Basis 98 aufweist, an der eine Trägerplatte 100 angebracht ist. Die Trägerplatte 100 weist eine zentrale Öffnung 102 auf, in der das eigentliche Bearbeitungswerkzeug 30, im gezeigten Fall eine Schleifscheibe, aufgenommen ist. Das Bearbeitungswerkzeug 30 umfasst einen Aufnahmekegel 104 zur Aufnahme in der Bearbeitungsspindel und einen scheibenförmigen Schleifkörpertlansch 106.

Die Öffnung 102 ist gestuft mit Hinterschneidungen ausgebildet und nimmt das Bearbeitungswerkzeug 30 lose auf, so dass es um seine zentrale Drehachse in der Platte 100 drehbar ist.

An der Basis 98 sind die Haltestifte 92 zur Anbringung am Magazin angebracht. Ferner sind an der Basis weitere Haltestifte 108 vorgesehen, die zur Anbringung, insbesondere Positionierung, an der Bearbeitungseinrichtung dienen. Hierzu ist auch ein Fixierzapfen 110 vorgesehen, mit dem der Werkzeugträger 90 fest an der Bearbeitungseinrichtung fixiert wird. In Figur 6 erkennt man auch Koppelstutzen 112 in der Seitenansicht, die zum fluidischen Ankoppeln von in der Basis 98 integrierten Fluidkanälen dienen. Diese Fluidkanäle kommunizieren fluidisch mit den Rohren 62 zum Zuführen von Kühl- und Schmiermittel an die Bearbeitungsstelle.

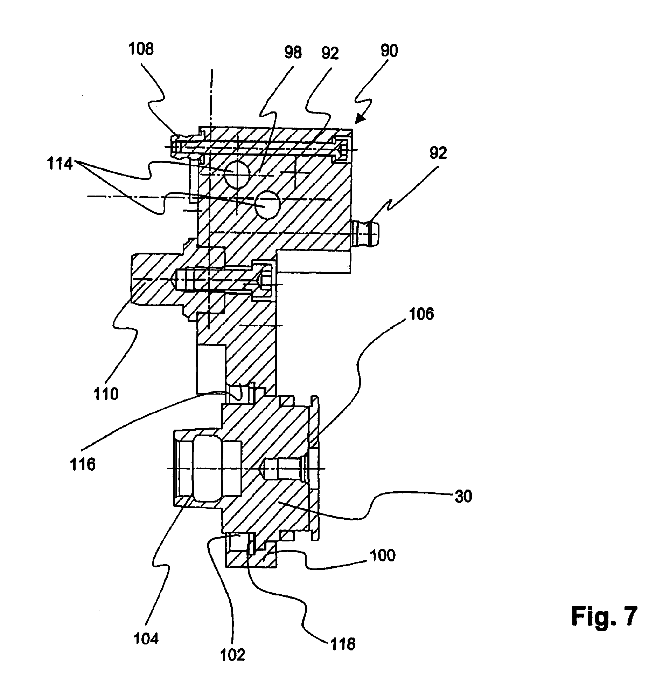

In der Längsschnittdarstellung durch den Werkzeugträger 90 gemäß Figur 7 erkennt man dessen Aufbau, wobei die Basis 98 integral mit der Platte 100 ausgebildet ist. Man erkennt in der Basis 98 die Fluidkanäle 114 zum Führen des Kühl/Schmiermittels zu den nicht gezeigten Rohren 62. Darüber hinaus erkennt man den am Werkzeugträger befestigten Zapfen 110. Schließlich erkennt man auch das Bearbeitungswerkzeug 30 im Schnitt, sowie die gestufte Innenoberfläche 116 der Öffnung 102, in der das Werkzeug drehbar gehalten und über einen Sicherungsring 118 gegen ein Herausfallen gesichert ist.

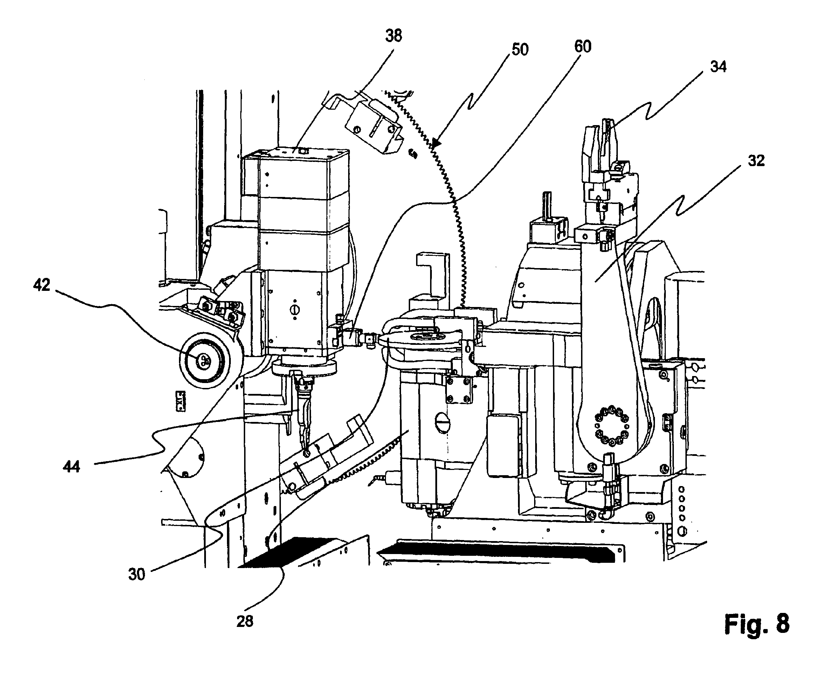

Figur 8 zeigt eine Referenziersituation, in der die Relativlage zwischen der Werkstückpositioniereinrichtung, insbesondere der Werkstückaufnahmespindel 38 und damit dem Rotationswerkstück 44, und dem Bearbeitungswerkzeug 30 über die Sensoranordnung 60 ermittelt wird. Die Sensoranordnung 60 ist als Dreiachssensor ausgebildet. In Figur 8 wird gerade die Relativlage bezüglich der Richtung Z1 (siehe Figur 1) ermittelt, d.h. in horizontaler Querrichtung. Der Dreiachssensor ist ein hochsensibler Berührungssensor, der bereits bei einer Kraft von wenigen Millinewton (mN) anspricht. Er könnte alternativ zu einer Ausgestaltung als Berührungssensor auch als berührungsloser Nährungssensor ausgebildet sein.

Auf diese Weise lässt sich in unmittelbarer räumlicher Nähe zu dem zu bearbeitenden Rotationswerkstück 44 die Lage des Werkzeugs 30 und dessen Bearbeitungsflächen ermitteln. Dadurch erhält man eine exakte Ausrichtung von Rotationswerkstück 44 einerseits und Bearbeitungswerkzeug 30 andererseits zueinander, so dass man hochpräzise Bearbeitungsvorgänge mit hoher Qualität ausführen kann.

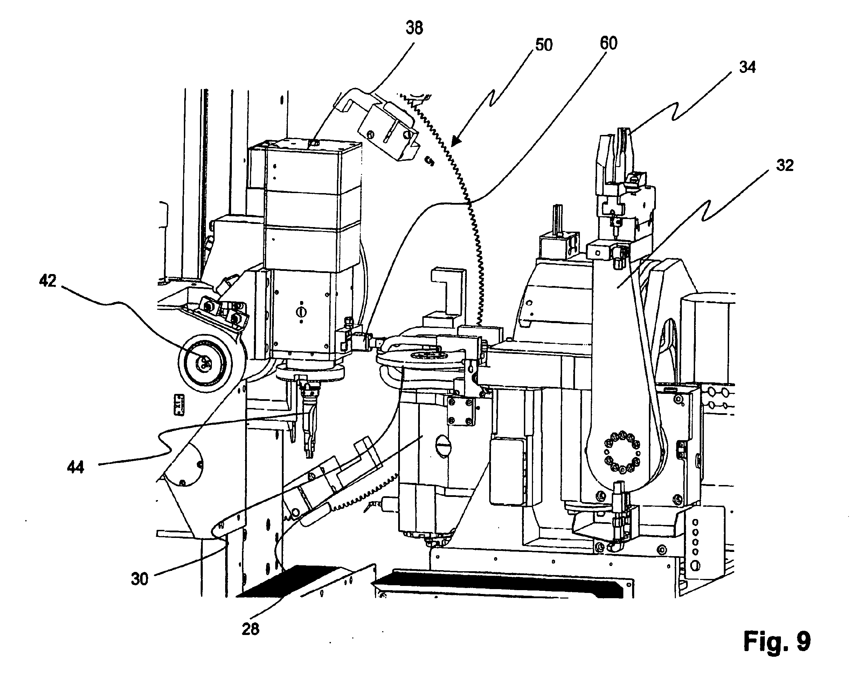

Figur 9 zeigt eine ähnliche Referenziersituation, wobei jedoch die Referenzierung in vertikaler Richtung X1 (siehe Figur 1) erfolgt. Der Dreiachssensor 60 tastet sich in vertikaler Richtung (von oben) auf das Bearbeitungswerkzeug 30 und erfasst dessen Relativlage in dieser Richtung im Verhältnis zu dem zu bearbeitenden Rotationswerkstück 44.

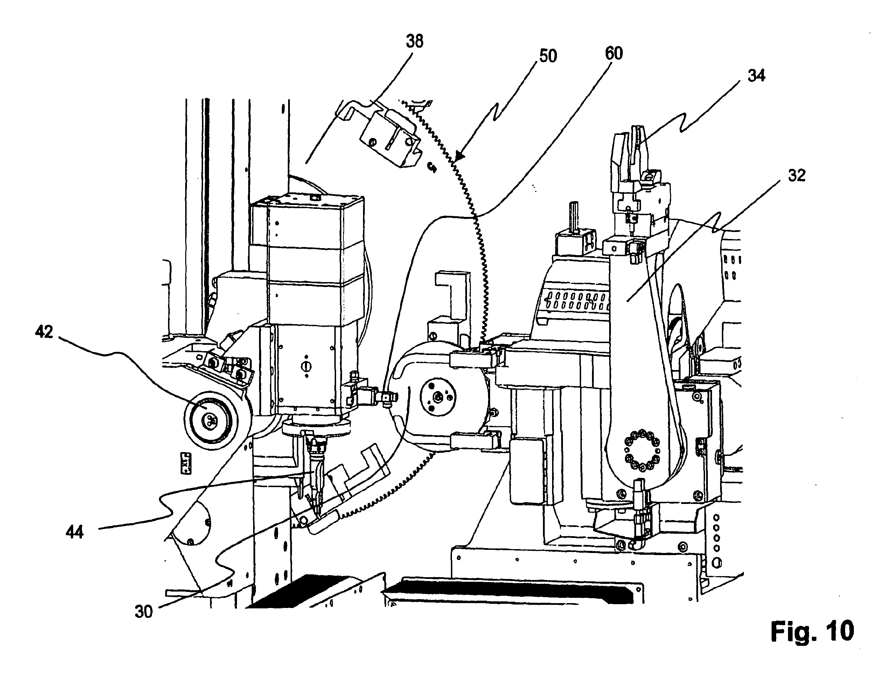

Figur 10 zeigt eine weitere Referenziersituation. Bei dieser wurde die Bearbeitungsspindel gegenüber der Ausrichtung gemäß Figuren 8 und 9 um 90° Grad in horizontale Lage gedreht. Das Bearbeitungswerkzeug 30 wird in Richtung Y1 (siehe Figur 1) über den Dreiachssensor 60 abgetastet.

Hinsichtlich der Referenzierung über den Dreiachssensor 60 bietet die erfindungsgemäße Vorrichtung den Vorteil, dass im Prozess referenziert werden kann, d.h. während kurzer Bearbeitungspausen, beispielsweise nach einem Austausch eines Bearbeitungswerkzeugs. Dadurch können Bearbeitungsfehler, die sich aus einem Werkzeugwechsel oder aber auch aufgrund thermischer Maßänderungen ergeben, vermieden werden. Beeinträchtigungen des Bearbeitungsergebnisses aufgrund von Verschleiß am Werkzeug oder aufgrund der Einspannsituation des Werkzeugs wegen der Toleranzen des Aufnahmekegels können somit vorab kompensiert werden. Darüber hinaus ist durch die Referenzierung eine Plausibilitätskontrolle sowie eine Sicherheitskontrolle möglich, d.h. es kann abgeprüft werden, ob die Achsen zueinander richtig stehen, ob das Werkzeug sowie das Rotationswerkstück zueinander richtig stehen, ob überhaupt das richtige Werkzeug eingespannt wurde usw. Wesentlich ist hierbei auch die ortsnahe Anordnung des Dreiachssensors 60 zum Werkstück 44, so dass Störeinflüsse, wie thermische Ausdehnung, Biegungen etc. klein gehalten werden können.

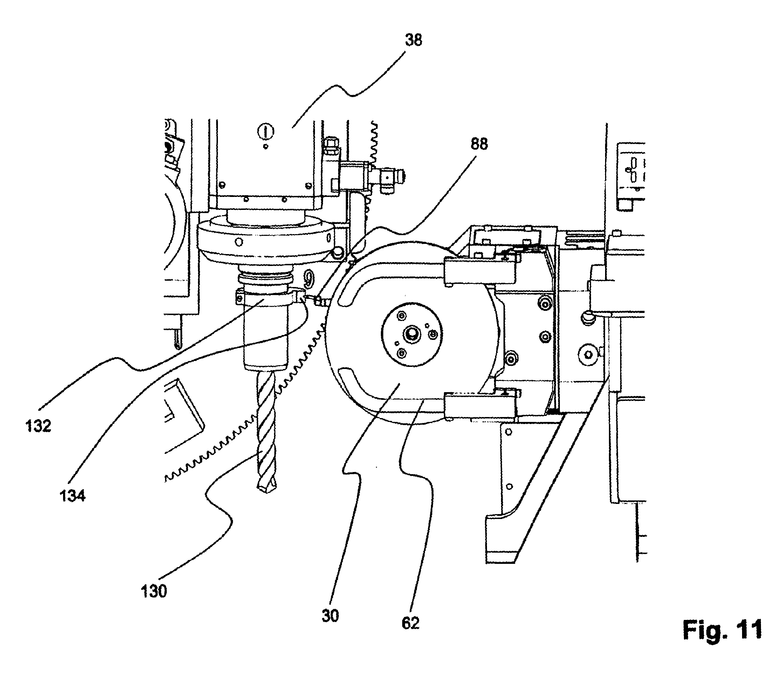

Figur 11 zeigt eine weitere Bearbeitungssituation, bei der ein Bohrer 130 mit einem Referenzflächenträger 132 versehen ist und mit einem Aufnahmeabschnitt in der Werkstückaufnahmespindel 38 eingespannt ist. Der Referenzflächenträger bleibt fest an dem Bohrer während der gesamten Bearbeitung festgespannt und umfasst eine Referenzfläche 134, die in der in Figur 11 gezeigten Darstellung gerade mit dem Messtaster erfasst wird. Der Referenzflächenträger 132 ist bei der Bearbeitung des Bohrers deshalb erforderlich, weil dieser keine bestimmte Referenzfläche aufweist, bezüglich der eine Bearbeitung begonnen und beendet werden kann. Daher wird der Bohrer vor seiner Bearbeitung mit dem Referenzflächenträger 132 versehen, der die Referenzfläche 134 zur Vermessung darbietet. Bezüglich dieser Referenzfläche kann dann der Bohrer 130 bearbeitet werden.

## Patentansprüche

1. Vorrichtung (10) zum Bearbeiten, insbesondere Erodieren und Schleifen, von mit Schneiden versehenen Rotationswerkstücken (44), mit
- einer Maschinenbasis (12),
- einer relativ zu der Maschinenbasis (12) verlagerbaren Bearbeitungseinrichtung (14),
- und einer relativ zur Maschinenbasis (12) verlagerbaren Werkstückpositioniereinrichtung (18),
wobei die Bearbeitungseinrichtung (14) wenigstens ein auf einer zur Maschinenbasis (12) verlagerbaren Schlittenanordnung (20) drehantreibbar angebrachtes Bearbeitungswerkzeug (30) zur Bearbeitung eines zu bearbeitenden Funktionsabschnitts des Rotationswerkstücks (44) aufweist und
wobei die Werkstückpositioniereinrichtung (18) eine relativ zur Maschinenbasis (12) verlagerbare Werkstückaufnahmeeinrichtung (46) aufweist, die einen Aufnahmeabschnitt des Rotationswerkstücks (44) unmittelbar oder über einen Aufnahmeadapter zum Anbringen des Rotationswerkstücks (44) an der Werkstückpositioniereinrichtung (18) aufnimmt,
**dadurch gekennzeichnet, dass** die Werkstückaufnahmeeinrichtung (46) derart relativ zur Maschinenbasis (12) ausgerichtet ist und den Aufnahmeabschnitt des Rotationswerkstücks (44) derart aufnimmt, dass das Rotationswerkstück (44) zum Bearbeiten mit seinem Funktionsabschnitt im wesentlichen in vertikaler Richtung hängend angeordnet ist.

2. Vorrichtung (10) nach Anspruch 1,
**dadurch gekennzeichnet, dass** die Schlittenanordnung (20) einen ersten Positionierschlitten (22) und einen zweiten Positionierschlitten (24) mit zueinander im wesentlichen orthogonalen, horizontal verlaufenden Bewegungsachsen (Z1, Y1) aufweist.

3. Vorrichtung (10) nach Anspruch 1 oder 2,
**dadurch gekennzeichnet, dass** die Bearbeitungseinrichtung (14) eine um eine Bearbeitungsspindelachse (L1) drehantreibbare Bearbeitungsspindel (28) aufweist.

4. Vorrichtung (10) nach Anspruch 3,
**dadurch gekennzeichnet, dass** die Bearbeitungseinrichtung (14) eine Spindelschwenkeinrichtung aufweist, mittels der die Bearbeitungsspindel (28) um eine Spindelschwenkachse (E1) derart verschwenkbar ist, dass die Bearbeitungsspindelachse (L1) sowohl in horizontale als auch in vertikale Lage bringbar ist.

5. Vorrichtung (10) nach einem der vorangehenden Ansprüche,
**dadurch gekennzeichnet, dass** die Werkstückpositioniereinrichtung (18) eine um eine Werkstückaufnahmespindelachse (A1) drehantreibbare Werkstückaufnahmespindel (38) aufweist.

6. Vorrichtung (10) nach Anspruch 5,
**dadurch gekennzeichnet, dass** die Werkstückpositioniereinrichtung (18) eine Spindelkippeinrichtung (42) aufweist, mittels der die Werkstückaufnahmespindel (38) um eine Spindelkippachse (B1) derart verschwenkbar ist, dass das zu bearbeitende Rotationswerkstück (44) in vertikale Schrägstellung bringbar ist.

7. Vorrichtung (10) nach einem der vorangehenden Ansprüche,
**dadurch gekennzeichnet, dass** die Bearbeitungseinrichtung (14) mit einem Werkzeugträger (90) koppelbar ist, an dem ein Bearbeitungswerkzeug (30) und eine diesem zugeordnete Schmiermittelzufuhranordnung (62) vorgesehen ist.

8. Vorrichtung (10) nach Anspruch 7,
**dadurch gekennzeichnet, dass** eine Mehrzahl von Werkzeugträgern (90) an einem vorzugsweise drehantreibbaren, insbesondere scheibenförmigen oder palettenartigen, Werkzeugträgermagazin (50) anbringbar ist.

9. Vorrichtung (10) nach Anspruch 7 oder 8,
**dadurch gekennzeichnet, dass** jeder Werkzeugträger (90) eine vordefinierte Schnittstelle zum Fixieren an der Bearbeitungseinrichtung (14), zum Anschließen einer Schmiermittelzuführung und zum Ankoppeln des Bearbeitungswerkzeugs (30) an der Bearbeitungsspindel (28) aufweist.

10. Vorrichtung (10) nach einem der Ansprüche 7 bis 9,
**dadurch gekennzeichnet, dass** jeder Werkzeugträger (90) eine Haltestruktur, insbesondere eine Haltestiftanordnung (92), zum lösbaren Anbringen an dem Werkzeugträgermagazin (50) aufweist.

11. Vorrichtung (10) nach einem der vorangehenden Ansprüche,
**gekennzeichnet durch** einen Werkstückwechseleinrichtung (32) zum Aufnehmen und Wechseln des zu bearbeitenden Roattionswerkstücks (44).

12. Vorrichtung (10) nach Anspruch 11,
**dadurch gekennzeichnet, dass** die Werkstückwechseleinrichtung einen an der Bearbeitungseinrichtung angebrachten Werkstückwechselarm (32) aufweist, der um eine Wechselarmschwenkachse (B2) relativ zur Bearbeitungseinrichtung (14) zu einem Werkstückmagazin hin schwenkbar ist.

13. Vorrichtung (10) nach einem der vorangehenden Ansprüche,
**dadurch gekennzeichnet, dass** die Werkstückpositioniereinrichtung (18) an einem hohl ausgebildeten Säulenabschnitt (16) der Maschinenbasis (12) angebracht und entlang dieses Säulenabschnitts (16) in vertikaler Richtung relativ zur Maschinenbasis (12) verlagerbar ist und dass in dem im Säulenabschnitt (16) vorgesehenen Hohlraum (70) ein auf die Werkstückaufnahmeeinrichtung (46) abgestimmtes, mit der Werkstückpositioniereinrichtung (18) gekoppeltes Gegengewicht (72) geführt ist.

14. Vorrichtung (10) nach einem der vorangehenden Ansprüche,
**dadurch gekennzeichnet, dass** an der Werkstückpositioniereinrichtung (18) ein Mehrachssensor (60), insbesondere ein Dreiachssensor vorgesehen ist, mittels dem eine Relativlage des Bearbeitungswerkzeugs (30) relativ zu der Werkstückpositioniereinrichtung (18) und dem an dieser angebrachten Rotationswerkstück (44) erfassbar ist.

15. Vorrichtung (10) nach einem der vorangehenden Ansprüche,
**dadurch gekennzeichnet, dass** an der Werkstückpositioniereinrichtung (18) eine Abrichteinrichtung (80) zum Abrichten des Bearbeitungswerkzeugs (30) vorgesehen ist.

## Claims

1. Device (10) for machining, in particular eroding and grinding, rotational workpieces (44) provided with cutting edges, with
- a machine base (12),
- a machining mechanism (14), which can be displaced relative to the machine base (12),
- and a workpiece positioning mechanism (18), which can be displaced relative to the machine base (12),
wherein the machining mechanism (14) has at least one machining tool (30), which is attached in a rotatably drivable manner to a slide arrangement (20), which can be displaced in relation to the machine base (12), for machining a functional portion to be machined of the rotational workpiece (44), and
wherein the workpiece positioning mechanism (18) has a workpiece holding mechanism (46), which can be displaced relative to the machine base (12) and holds a holding portion of the rotational workpiece (44) directly or via a holding adapter for attaching the rotational workpiece (44) to the workpiece positioning mechanism (18), **characterised in that** the workpiece holding mechanism (46) is oriented relative to the machine base (12) and holds the holding portion of the rotational workpiece (44) such that the rotational workpiece (44) is arranged with its functional portion suspended substantially in the vertical direction for machining.

2. Device (10) according to claim 1,
**characterised in that** the slide arrangement (20) has a first positioning slide (22) and a second positioning slide (24) with horizontally extending axes of motion (Z1, Y1) which are substantially orthogonal to one another.

3. Device (10) according to claim 1 or 2,
**characterised in that** the machining mechanism (14) has a machining spindle (28) which can be driven so as to rotate about a machining spindle axis (L1).

4. Device (10) according to claim 3,
**characterised in that** the machining mechanism (14) has a spindle pivoting mechanism by means of which the machining spindle (28) can be pivoted about a spindle pivot axis (E1) such that the machining spindle axis (L1) can be brought both into a horizontal and into a vertical position.

5. Device (10) according to one of the preceding claims,
**characterised in that** the workpiece positioning mechanism (18) has a workpiece holding spindle (38) which can be driven so as to rotate about a workpiece holding spindle axis (A1).

6. Device (10) according to claim 5,
**characterised in that** the workpiece positioning mechanism (18) has a spindle tilting mechanism (42) by means of which the workpiece holding spindle (38) can be pivoted about a spindle tilting axis (B1) such that the rotational workpiece (44) to be machined can be brought into a vertical oblique position.

7. Device (10) according to one of the preceding claims,
**characterised in that** the machining mechanism (14) can be coupled to a tool carrier (90) on which a machining tool (30) and a lubricant supply arrangement (62) associated therewith are provided.

8. Device (10) according to claim 7,
**characterised in that** the a plurality of tool carriers (90) can be attached to a tool carrier magazine (50), which can be rotatably driven and is in particular disc-shaped or pallet-like.

9. Device (10) according to claim 7 or 8,
**characterised in that** each tool carrier (90) has a predefined interface for fixing to the machining mechanism (14), for connecting a lubricant supply and for coupling the machining tool (30) to the machining spindle (28).

10. Device (10) according to one of claims 7 to 9,
**characterised in that** each tool carrier (90) has a retaining structure, in particular a retaining pin arrangement (92), for attaching to the tool carrier magazine (50) in a detachable manner.

11. Device (10) according to one of the preceding claims,
**characterised by** a workpiece changing mechanism (32) for receiving and changing the rotational workpiece (44) to be machined.

12. Device (10) according to claim 11,
**characterised in that** the workpiece changing mechanism has a workpiece changing arm (32) which is attached to the machining mechanism and can be pivoted about a changing arm pivot axis (B2) relative to the machining mechanism (14) towards a workpiece magazine.

13. Device (10) according to one of the preceding claims,
**characterised in that** the workpiece positioning mechanism (18) is attached to a hollow column portion (16) of the machine base (12) and is displaceable relative to the machine base (12) along this column portion (16) in vertical direction, and that a counterweight (72) adapted to the workpiece holding mechanism (46) and coupled to the workpiece positioning mechanism (18) is guided in the hollow space (70) provided in the column portion (16).

14. Device (10) according to one of the preceding claims,
**characterised in that** a multi-axis sensor (60), in particular a three-axis sensor, is provided on the workpiece positioning mechanism (18), by means of which sensor a position of the machining tool (30) relative to the workpiece positioning mechanism (18) and the rotational workpiece (44) attached to this can be detected.

15. Device (10) according to one of the preceding claims,
**characterised in that** a truing device (80) for truing the machining tool (30) is provided on the workpiece positioning mechanism (18).

## Revendications

1. Dispositif (10) destiné à l'usinage, notamment à l'usinage par érosion et par ponçage, de pièces à usiner rotatives (44) pourvues de lames coupantes, comprenant
- une base pour machine (12)
- un dispositif d'usinage (14) déplaçable par rapport à la base pour machine (12)
- un dispositif de positionnement de pièce à usiner (18) déplaçable par rapport à la base pour machine (12)
le dispositif d'usinage (14) présentant au moins un outil d'usinage (30) monté entraînable en rotation sur un système de chariot (20) déplaçable par rapport à la base pour machine (12) pour l'usinage d'un segment fonctionnel de la pièce à usiner rotative (44) et
le dispositif de positionnement de pièce à usiner (18) présentant un dispositif de prise de pièce à usiner (46) déplaçable par rapport à la base pour machine (12), dans lequel est logé directement ou par le biais d'un adaptateur un segment de prise de la pièce à usiner rotative (44) pour le montage de la pièce à usiner rotative (44) sur le dispositif de positionnement de pièce à usiner (18),
**caractérisé en ce que** le dispositif de prise de pièce à usiner (46) est orienté de telle sorte par rapport à la base pour machine (12) et le segment de prise de la pièce à usiner rotative (44) logé de telle sorte que la pièce à usiner rotative (44) est, avec son segment fonctionnel, disposée pour l'essentiel suspendue dans le sens vertical.

2. Dispositif (10) selon la revendication 1,
**caractérisé en ce que** le système de chariot (20) présente un premier chariot de positionnement (22) et un deuxième charriot de positionnement (24) munis d'axes de translation ( Z1, Y1) s'étendant horizontalement et pour l'essentiel de manière orthogonale les uns par rapport aux autres.

3. Dispositif (10) selon la revendication 1 ou 2,
**caractérisé en ce que** le dispositif d'usinage (14) présente une broche d'usinage (28) entraînable en rotation autour d'un axe de broche d'usinage (L1).

4. Dispositif (10) selon la revendication 3,
**caractérisé en ce que** le dispositif d'usinage (14) présente un dispositif de pivotement de broche au moyen duquel la broche d'usinage (28) peut être pivotée de telle sorte autour de l'axe de pivotement de broche (E1) que l'axe de broche d'usinage (L1) peut être amené aussi bien en position horizontale qu'en position verticale.

5. Dispositif (10) selon l'une des revendications précédentes,
**caractérisé en ce que** le dispositif de positionnement de pièce à usiner (18) présente une broche de prise de pièce à usiner (38) entraînable en rotation autour d'un axe de broche de prise de pièce à usiner (A1).

6. Dispositif (10) selon la revendication 5,
**caractérisé en ce que** le dispositif de positionnement de pièce à usiner (18) présente un dispositif de basculement de broche (42) au moyen duquel la broche de prise de pièce à usiner (38) peut être basculée de telle sorte autour de l'axe de basculement de broche (B1) que la pièce à usiner rotative (44) peut être amenée en position oblique verticale.

7. Dispositif (10) selon l'une des revendications précédentes,
**caractérisé en ce que** le dispositif d'usinage (14) peut être accouplé à un porte-outil (90) sur lequel sont prévus un outil d'usinage (30) et un système d'alimentation en lubrifiant (62).

8. Dispositif (10) selon la revendication 7,
**caractérisé en ce qu'**une pluralité de porte-outil (90) peut être montée sur un magasin porte-outil (50) préférentiellement entraînable en rotation et se présentant plus particulièrement sous forme de disque ou de palette.

9. Dispositif (10) selon la revendication 7 ou 8,
**caractérisé en ce que** chaque porte-outil (90) présente une interface prédéfinie permettant sa fixation sur le dispositif d'usinage (14), le raccordement d'une alimentation en lubrifiant et l'accouplement de l'outil d'usinage (30) à la broche d'usinage (28).

10. Dispositif (10) selon l'une des revendications 7 à 9,
**caractérisé en ce que** chaque porte-outil (90) présente une structure de maintien, plus particulièrement une disposition de goupille de maintien (92), permettant le montage amovible sur le magasin porte-outil (50).

11. Dispositif (10) selon l'une des revendications précédentes,
**caractérisé par** un dispositif de changement de pièce à usiner (32) servant à la prise et au changement de la pièce à usiner rotative (44).

12. Dispositif (10) selon la revendication 11,
**caractérisé en ce que** le dispositif de changement de pièce à usiner présente un bras de changement de pièce à usiner (32) monté sur le dispositif d'usinage, lequel bras peut basculer par rapport au dispositif d'usinage (14) autour d'un axe de basculement de bras de changement (B2) vers un magasin de pièces à usiner.

13. Dispositif (10) selon l'une des revendications précédentes,
**caractérisé en ce que** le dispositif de positionnement de pièce à usiner (18) est monté sur une partie de montant (16) réalisée sous forme de colonne creuse de la base pour machine (12) et peut se déplacer dans le sens vertical le long de ladite partie de montant (16) par rapport à la base pour machine (12), et **en ce qu'**un contrepoids (72) adapté au dispositif de prise de pièce à usiner (46) et accouplé au dispositif de positionnement de pièce à usiner (18) est guidé à l'intérieur de la cavité (70) prévue dans la partie de montant (16).

14. Dispositif (10) selon l'une des revendications précédentes,
**caractérisé en ce qu'**un détecteur multi-axes (60), plus particulièrement un détecteur à axe de rotation, est prévu sur le dispositif de positionnement de pièce à usiner (18) pour pouvoir détecter une position relative de l'outil d'usinage (30) par rapport au dispositif de positionnement de pièce à usiner (18) et à la pièce à usiner rotative (44) montée sur celui-ci.

15. Dispositif (10) selon l'une des revendications précédentes,
**caractérisé en ce qu'**un dispositif de dressage (80) servant au dressage de l'outil d'usinage (30) est prévu sur le dispositif de positionnement de pièce à usiner (18).
